# FASCICULE DE BREVET EUROPEEN

(11) **EP 0 403 409 B1**
(45) Date de publication et mention de la délivrance du brevet: **21.04.1993**
(21) Numéro de dépôt: 90440055.3
(22) Date de dépôt: 14.06.1990
(51) Int. Cl.: A01D 78/12

(54) **Machine agricole pour l'andainage comportant des bras porte-outils repliables**
Landmaschine zum Schwaden mit zusammenklappbaren Werkzeugträgern
Farmmachine for windrowing products with foldable toolholder arms

(30) Priorité: 16.06.1989 FR 8908233
(43) Date de publication de la demande: 19.12.1990
(73) Titulaire: KUHN S.A., F-67700 Saverne (FR)
(72) Inventeur: Aron, Jérôme, Dossenheim-sur-Zinsel F-67330 Bouxwiller (FR)
(74) Mandataire: Andres, Jean-Claude

(56) Documents cités:
- DE-A- 1 482 771
- DE-A- 2 423 326
- DE-B- 1 907 337
- FR-A- 1 415 872
- FR-A- 1 532 881
- FR-A- 2 179 024
- FR-A- 2 355 440
- GB-A- 2 046 566

## Description

La présente invention se rapporte à une machine agricole pour l'andainage de produits, présentant notamment un bâti qui peut être relié à un tracteur et qui comporte au moins un rotor tournant autour d'un axe sensiblement vertical, lequel rotor possède un boîtier central portant des bras porte-outils et dans lequel se situe une came qui commande lesdits bras porte-outils de telle sorte que durant chaque révolution ils pivotent autour de leur axe géométrique respectif afin que leurs outils ramassent puis déposent les produits sous la forme d'un andain, lesdits bras porte-outils étant réalisés en au moins une partie intérieure qui se situe près du boîtier central et une partie extérieure qui porte les outils de travail et qui est reliée à la partie intérieure au moyen d'une articulation autour de laquelle elle peut être déplacée pour le transport.

Sur une machine de ce genre, connue dans le brevet FR 2 355 440, le rotor comporte deux bras ayant chacun une partie extérieure repliable vers le bas autour d'un axe transversal à la direction dans laquelle s'étend le bras concerné. Pour le transport, les deux bras repliés sont amenés sur le côté gauche de la machine, de manière à réduire sa largeur. Il est alors nécessaire de bloquer le rotor pour éviter que ces deux bras ne se déplacent. Un tel déplacement provoquerait, d'une part, un pivotement vers le haut des parties repliées en raison de la commande effectuée par la came et, d'autre part, l'arrivée de bras non repliés sur le côté de la machine et par conséquent une augmentation de la largeur. En sus, ledit pivotement des parties repliées des bras pourrait entraîner des détériorations en cas de rencontre avec le châssis ou les bras voisins. Ce mode de réalisation est donc relativement aléatoire. De plus, il ne convient pas pour réduire suffisamment les dimensions des très grandes machines ou bien des machines frontales. Sur ces machines, il est pratiquement nécessaire de raccourcir tous les bras porte-outils afin de réduire à la fois leur largeur et leur longueur pour le transport.

Sur une autre machine connue, tous les bras porte-outils du rotor sont réalisés en deux parties téléscopiques. Pour le transport, les parties extérieures des bras sont glissées vers l'intérieur en vue de réduire le diamètre du rotor. Cet agencement est cependant très fragile. Ledit glissement de la partie extérieure est rapidement freiné voire empêché par la terre ou les débris végétaux qui peuvent s'y coller, par la rouille qui peut se former ou par des déformations, même légères, qui peuvent résulter de chocs subis par les bras. Pour ces différentes raisons, cette solution ne convient guère pour le réglage des bras sur les machines agricoles destinées à l'andainage.

Sur une autre machine connue, chaque bras porte-outils du rotor comporte une partie extérieure déconnectable d'une partie intérieure. Cette partie extérieure qui porte les outils de travail peut être fixée sur le châssis de la machine en vue du transport. Dans ce cas, l'utilisateur est obligé de déplacer manuellement toutes les parties extérieures lors de chaque transposition de la position de travail dans la position de transport et vice-versa. En raison du grand nombre de pièces à déplacer et du poids de celles-ci, cette opération est relativement pénible à effectuer. Par conséquent, il est à craindre que la transposition ne soit réalisée que pour quelques bras, ce qui est dangereux en cas de déplacement sur une route.

La présente invention a pour but une machine avec des bras porte-outils articulés n'ayant pas les inconvénients des machines connues.

A cet effet, une importante caractéristique de l'invention consiste en ce que l'articulation entre les deux parties de chaque bras porte-outils de la machine présente deux pivots dont le premier est sensiblement dirigé dans la même direction que la partie intérieure du bras correspondant et le second est dirigé de telle sorte qu'il forme un angle par rapport au premier pivot et, qu'elle comporte des moyens de blocage de la partie extérieure de chaque bras par rapport à sa partie intérieure durant le travail.

Dans la position de travail, les deux parties de chaque bras porte-outils sont liées entre elles de sorte qu'elles pivotent ensemble par suite du guidage assuré par la came de commande.

Pour le transport, la partie extérieure de chaque bras porte-outils est débloquée et est déplacée autour du second pivot, de telle sorte qu'elle se situe sensiblement sur un cercle fictif passant au niveau des extrémités des parties intérieures des bras. Lorsque toutes les parties extérieures des bras porte-outils sont repliées tel que décrit ci-dessus, le diamètre du rotor est considérablement réduit. Dans cette nouvelle position, le premier pivot permet à la partie extérieure de chaque bras de rester pratiquement immobile par rapport à la partie intérieure correspondante même si celle-ci pivote sous l'action de la came de commande.

Ce mode de réalisation permet de passer aisément de la position de travail dans la position de transport et vice-versa. Les parties extérieures des bras n'ont pas besoin d'être démontées ou d'être emboîtées dans les parties intérieures. En sus, le rotor peut tourner sans qu'il y ait un risque d'endommagement des bras porte-outils repliés.

Une autre caractéristique de l'invention consiste en ce que la partie intérieure de chaque bras porte-outils est sensiblement droite et que le premier pivot s'étend dans le prolongement de cette partie intérieure. De cette manière, la partie extérieure correspondante est totalement insensible aux pivotements de la partie intérieure, dans la position repliée pour le transport.

Une autre caractéristique de l'invention consiste en ce que, au niveau de l'articulation entre les deux parties de chaque bras porte-outils sont prévus des moyens de blocage pour solidariser la partie extérieure avec la partie intérieure correspondante ou le pivot solidaire de cette dernière. Ces moyens de blocage permettent notamment de maintenir la partie extérieure de chaque bras en position de travail et de la faire pivoter avec la partie intérieure correspondante dans cette position.

Selon une autre caractéristique de l'invention, la partie extérieure de chaque bras comporte une patte ou un crochet de fixation permettant de la relier à une partie non pivotante du rotor dans la position de transport.

D'autres caractéristiques et avantages de l'invention ressortiront des revendications et de la description ci-après des exemples de réalisation non limitatifs de l'invention, avec référence aux dessins annexés dans lesquels :
- la figure 1 représente une vue de dessus d'une machine selon l'invention dans la position de travail,
- la figure 2 représente une vue de côté, partiellement en coupe, de la machine selon la figure 1,
- la figure 3 représente, à plus grande échelle, une vue de dessus de l'articulation d'un bras porte-outils dans la position de travail,
- la figure 4 représente une vue de face, avec une coupe partielle, de cette articulation,
- la figure 5 représente une vue de dessus de la machine selon l'invention dans la position de transport,
- la figure 6 représente une vue de détail de l'articulation d'un bras porte-outils dans la position de transport,
- la figure 7 représente une vue de dessus d'une variante de réalisation de l'articulation d'un bras porte-outils en position de travail,
- la figure 8 représente une vue de face, avec une coupe partielle, de cette variante de réalisation,
- la figure 9 représente une vue de dessus de cette variante de réalisation, dans la position de transport.

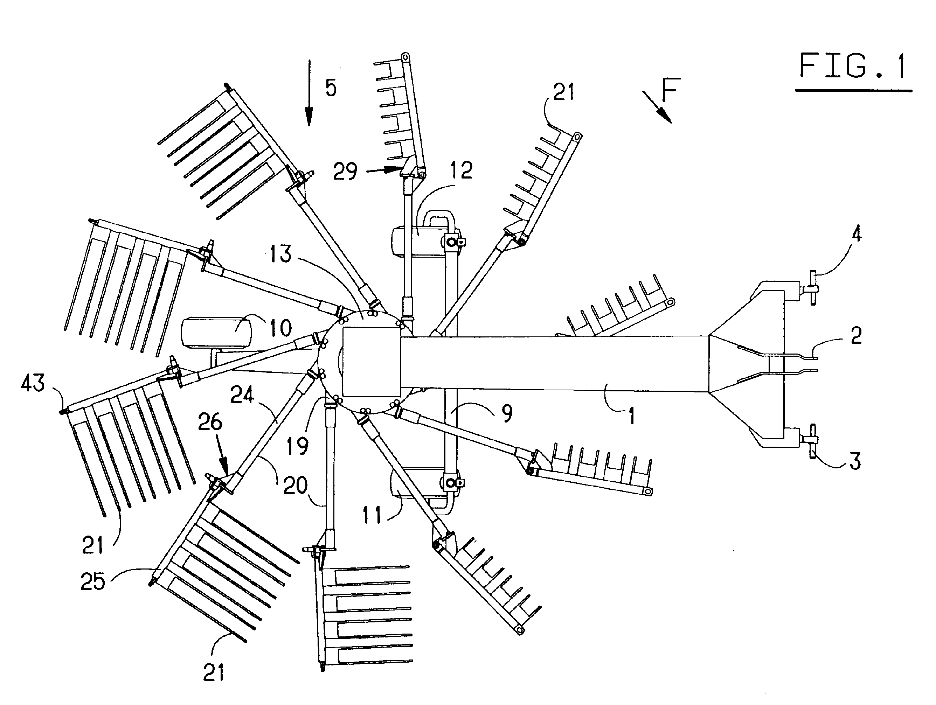

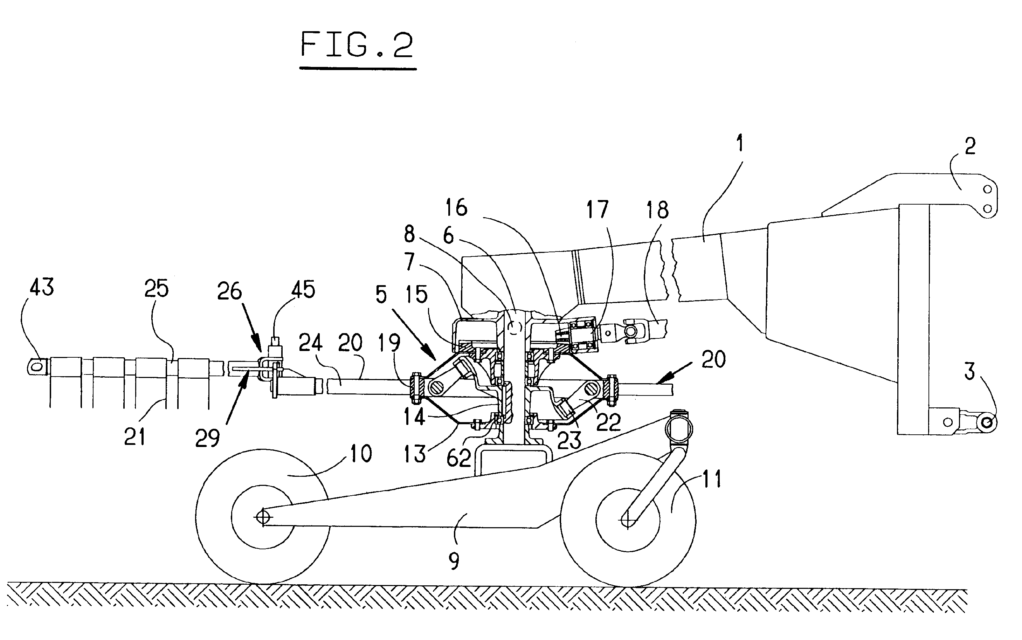

Telle qu'elle est représentée sur les figures 1 et 2 la machine selon l'invention possède un bâti (1) en forme de poutre sensiblement horizontale. L'extrémité avant dudit bâti comporte trois points d'accrochage (2, 3, 4) servant à l'accouplement au dispositif de relevage hydraulique d'un tracteur non représenté. Un rotor d'andainage (5) qui peut être entraîné en rotation dans le sens de la flèche (F) est relié à l'extrémité arrière de ce bâti (1).

Ledit rotor (5) est monté de manière à pouvoir tourner sur un axe support sensiblement vertical (6). L'extrémité supérieure de cet axe (6) est logée dans un carter (7) qui est lui-même articulé sur le bâti (1) au moyen d'un axe (8) sensiblement horizontal. L'extrémité inférieure de l'axe support (6) est liée à un châssis (9) en forme de T qui porte trois roulettes (10, 11, 12) se déplaçant sur le sol durant le travail. Le rotor (5) possède un boîtier central (13) qui est monté sur l'axe support (6) au moyen de roulements à billes (62). Il se situe entre le carter (7) et le châssis (9). Dans ce boîtier (13) se situe une came de commande (14) qui est rendue solidaire de l'axe support (6). La partie supérieure dudit boîtier (13) est munie d'une couronne dentée (15). Celle-ci engrène avec un pignon d'entraînement (16) qui est fixé sur un arbre (17) pouvant être relié, d'une manière connue, à l'arbre de prise de force du tracteur, par l'intermédiaire d'arbres de transmission (18). La couronne (15) et le pignon (16) se situent dans le carter (7) qui assure leur protection.

Le boîtier (13) porte à sa périphérie des paliers (19) dans lesquels sont logés des bras porte-outils (20), de manière à ce qu'ils puissent pivoter autour de leurs axes géométriques longitudinaux. Ces bras (20) s'étendent à partir du boîtier (13) en forme de rayons. A leur extrémité la plus éloignée dudit boîtier, ils sont munis d'outils (21) constitués par des fourches de râtelage disposées côte à côte. L'autre extrémité de chaque bras (20) se situe dans le boîtier (13) et porte un levier (22) muni d'un galet (23) qui est guidé dans la came de commande (14).

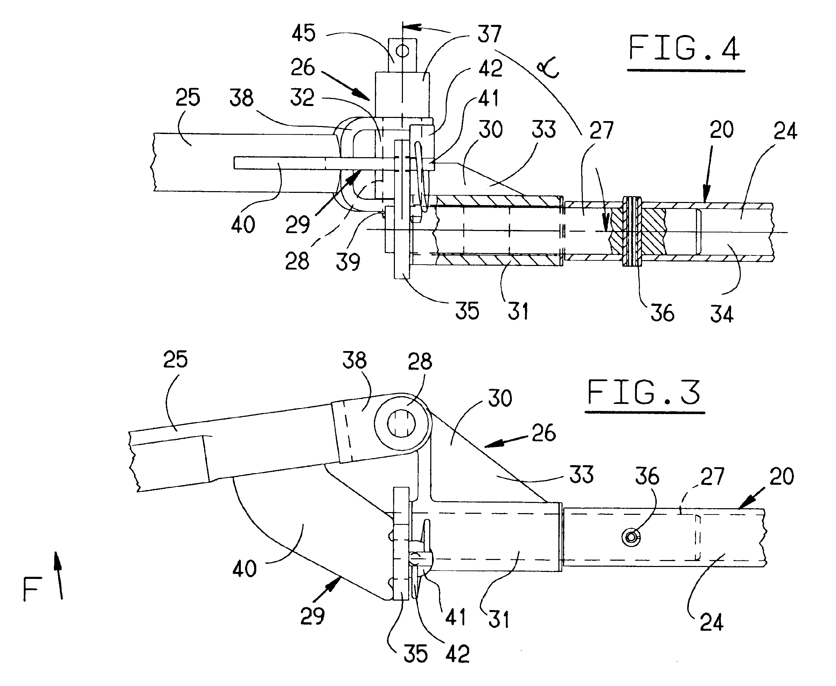

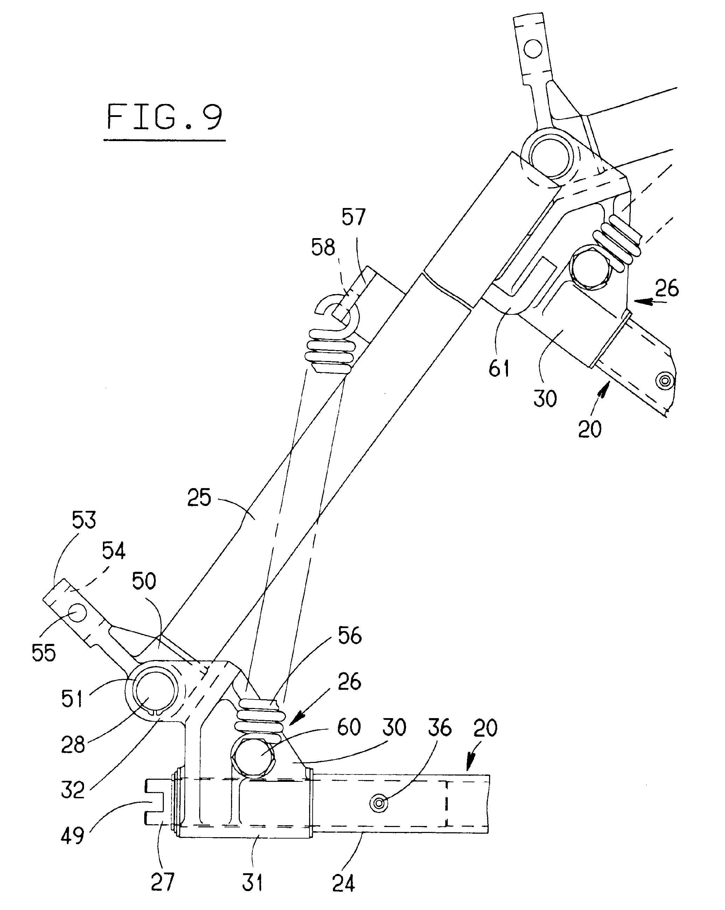

Chacun de ces bras porte-outils (20) est réalisé en au moins une partie intérieure (24) qui se situe près du boîtier central (13) et une partie extérieure (25) qui porte les outils de travail (21). Ces deux parties (24 et 25) sont reliées entre elles au moyen d'une articulation (26) présentant deux pivots (27 et 28) (voir figures 3, 4 et 6 à 9). Le premier pivot (27) est sensiblement dirigé dans la même direction que la partie intérieure (24) correspondante et le second pivot (28) est dirigé de telle sorte qu'il forme un angle (α) par rapport audit premier pivot. Au niveau de cette articulation (26) sont, en sus, prévus des moyens de blocage (29) pour solidariser la partie extérieure (25) de chaque bras (20) avec sa partie intérieure (24) dans la position de travail.

Dans le mode de réalisation représenté sur les figures 1 à 6, les deux pivots (27 et 28) de chaque articulation (26) sont décalés l'un par rapport à l'autre. Vu dans le sens de rotation (F) le second pivot (28) se situe devant le premier pivot (27). Ils sont positionnés au moyen d'une pièce de jonction (30). Celle-ci est constituée par deux paliers (31 et 32) qui sont reliés entre eux par une patte (33) et dont chacun présente un alésage pour un desdits pivots. On voit par ailleurs que la partie intérieure (24) de chaque bras (20) est sensiblement droite et comporte au moins une extrémité creuse (34). Le premier pivot (27) s'étend sensiblement dans le prolongement de cette partie intérieure (24). Ce pivot (27) a une forme cylindrique et comporte à l'une de ses extrémités une bague d'arrêt (35). Il est engagé dans l'alésage du palier (31) de la pièce de jonction (30) et dans l'extrémité creuse (34) de la partie intérieure (24). Il est bloqué dans ladite partie intérieure au moyen d'une goupille (36).

Le deuxième pivot (28) a également une forme cylindrique et comporte à l'une de ses extrémités un épaulement (37). Il est logé dans l'alésage du palier (32) de la pièce de jonction (30). Cet alésage est dirigé de telle sorte que la valeur de l'angle (α ) que forment entre eux les deux pivots (27 et 28) est sensiblement égale à 90°. La partie extérieure (25) de chaque bras (20) comporte à son extrémité qui est dirigée vers le boîtier central (13) une chape d'articulation (38) présentant des orifices dans lesquels passe le second pivot (28). Ce dernier est arrêté axialement au moyen de l'épaulement (37) qui se situe d'un côté par rapport au palier (32) et à la chape d'articulation (38) et, d'un circlips (39) monté sur l'extrémité du pivot (28) située de l'autre côté par rapport à ces mêmes pièces (voir figure 4).

Les moyens (29) pour bloquer l'une par rapport à l'autre les deux parties (24 et 25) de chaque bras (20) sont clairement visibles sur les figures 3 et 4. Chaque partie extérieure (25) comporte près de son extrémité qui est orientée vers le boîtier central (13) une patte (40) s'étendant dans un plan radial. Cette patte (40) possède une oreille de blocage (41) qui est orientée de façon à ce qu'elle soit sensiblement parallèle à la partie intérieure (24) dans la position de travail. La bague d'arrêt (35) du premier pivot (27) présente une ouverture dont la taille correspond à peu près à la section de l'oreille (41). Celle-ci peut ainsi être engagée dans ladite ouverture et être arrêtée par rapport à la bague d'arrêt (35) au moyen d'une goupille (42).

La partie extérieure (25) de chaque bras (20) comporte également à son extrémité opposée à l'articulation (26) une patte de fixation (43) dirigée à peu près perpendiculairement au plan dans lequel s'étendent les outils de travail (21). Cette patte (43) comporte un trou (44) de forme allongée. Chaque second pivot (28) comporte à son extrémité qui est dirigée vers le haut un téton (45) d'une hauteur supérieure à l'épaisseur de la patte de fixation (43). Chacune de ces pattes de fixation (43) peut ainsi être accrochée avec la partie extérieure (25) correspondante, au téton (45) du pivot (28) de l'articulation (26) du bras (20) précédent. Pour cela la distance entre le second pivot (28) et la patte de fixation (43) d'une même partie extérieure (25) est égale à la distance entre les seconds pivots (28) des différentes articulations (26).

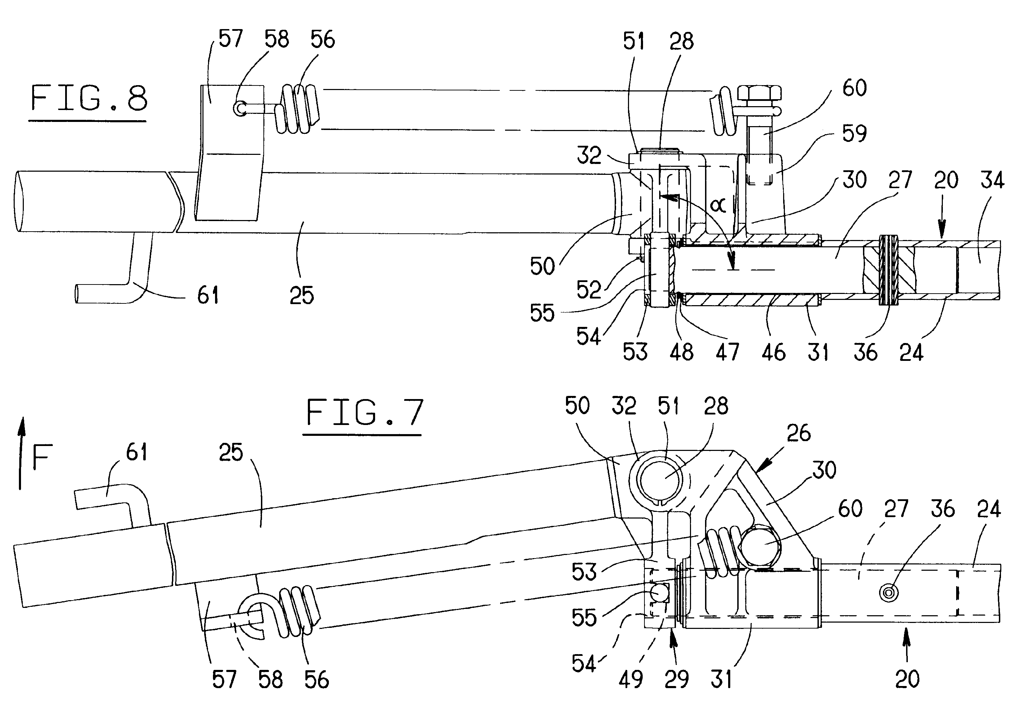

La variante de réalisation selon les figures 7 à 9 comporte un grand nombre de pièces communes avec le mode de réalisation décrit ci-avant. Ces pièces communes sont désignées par les mêmes repères. Dans cette variante le second pivot (28) de chaque articulation (26) est également décalé vers l'avant (vu dans le sens de rotation (F) du rotor) par rapport au premier pivot (27). Ces deux pivots (27 et 28) sont sensiblement cylindriques et forment un angle (α) d'environ 90° entre eux. Ledit premier pivot (27) est engagé dans l'extrémité creuse (34) de la partie intérieure (24) du bras porte-outils (20) et y est bloqué au moyen d'une goupille (36). Sur le premier pivot (27) est montée une pièce de jonction (30). Celle-ci comporte un palier cylindrique (31) avec un alésage pour le montage sur le premier pivot (27) et un palier (32) en forme de chape, dans lequel est logé le second pivot (28).

Dans l'alésage du palier (31) sont prévues des bagues (46) pour faciliter la rotation du pivot (27) par rapport à la pièce de jonction (30). Celle-ci est bloquée dans le sens axial sur le pivot (27), d'un côté, par la partie intérieure (24) et, de l'autre côté, par une rondelle (47) et un circlips (48). Le premier pivot (27) dépasse dudit palier (31) et comporte dans son extrémité libre une entaille (49).

La partie extérieure (25) de chaque bras (20) comporte un embout (50) qui se situe dans la chape formée par le palier (32) de la pièce de jonction (30). Cet embout (50) présente un alésage transversal à travers lequel passe le second pivot (28). Ce dernier est immobilisé axialement avec des circlips (51 et 52).

Chaque embout (50) comporte une patte de blocage (53) qui s'étend latéralement. Cette patte présente un alésage (54) dont le diamètre est légèrement supérieur à celui du premier pivot (27). Dans cet alésage (54) est prévu un entraineur (55) de forme cylindrique, qui le traverse de part en part. Dans la position de travail cette patte (53) est engagée sur le premier pivot (27). L'extrémité de celui-ci se situe alors dans l'alésage (54) et l'entraineur (55) est logé dans l'entaille (49) (figures 7 et 8).

Un ressort de traction (56) relie la partie extérieure (25) de chaque bras porte-outils (20) à la pièce de jonction (30) correspondante. A cet effet, chaque partie extérieure (25) comporte une patte d'accrochage (57). Celle-ci est positionnée de telle sorte que le point d'accrochage (58) du ressort (56) se trouve sensiblement à la même distance des deux extrémités de la partie extérieure (25). La pièce de jonction (30) comporte un bossage (59) avec une vis (60) qui constitue le point d'accrochage du ressort (56). Ce point se situe plus près du boîtier central (13) du rotor que le second pivot (28) et, vu dans le sens de rotation (F), plus en arrière que ledit pivot (28). Le ressort (56) se situe en sus au-dessus du plan dans lequel pivote la partie extérieure (25) de chaque bras (20), autour du second pivot (28). Dans chaque position de ladite partie extérieure (25) le ressort (56) exerce sur elle une traction qui tend à la faire pivoter en direction du boîtier central (15) du rotor.

La partie extérieure (25) de chaque bras porte- outils (20) comporte près de son extrémité la plus éloignée un crochet de fixation (61) servant à l'immobiliser dans la position de transport.

Dans la position de travail la partie extérieure (25) de chaque bras (20) selon le premier mode de réalisation décrit s'étend plus ou moins dans le prolongement de la partie intérieure (24) correspondante. Elle est bloquée par rapport à ladite partie intérieure au moyen de l'oreille (41) qui est immobilisée dans la bague d'arrêt (35). Dans cette position, la patte (40) s'appuie contre cette bague d'arrêt (35). Lorsque le boîtier central (13) est entraîné en rotation à travers la couronne dentée (15) et le pignon (16), dans le sens de la flèche (F), les galets (23) des leviers (22) qui sont reliés aux parties intérieures (24) se déplacent dans la came (14).
Celle-ci commande alors les deux parties (24 et 25) des bras (20) pour que durant chaque révolution ils pivotent autour de leurs axes géométriques, de telle sorte que dans la partie avant de leur trajectoire, les outils (21) soient dirigés vers le sol et ramassent les produits, par exemple du fourrage, couchés sur le sol et que dans la partie latérale de leur trajectoire, lesdits outils se lèvent et déposent les produits ramassés sous la forme d'un andain.

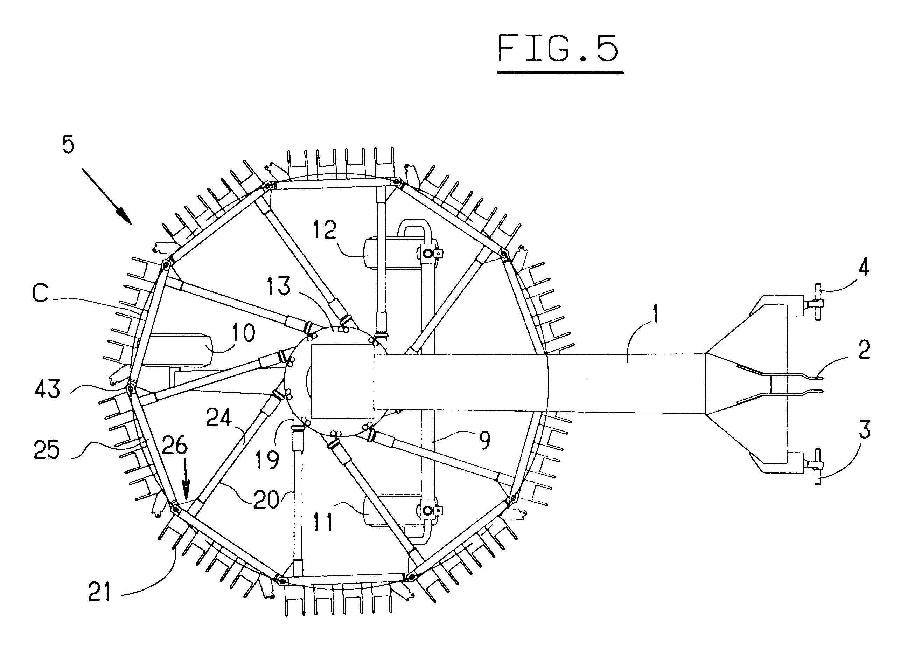

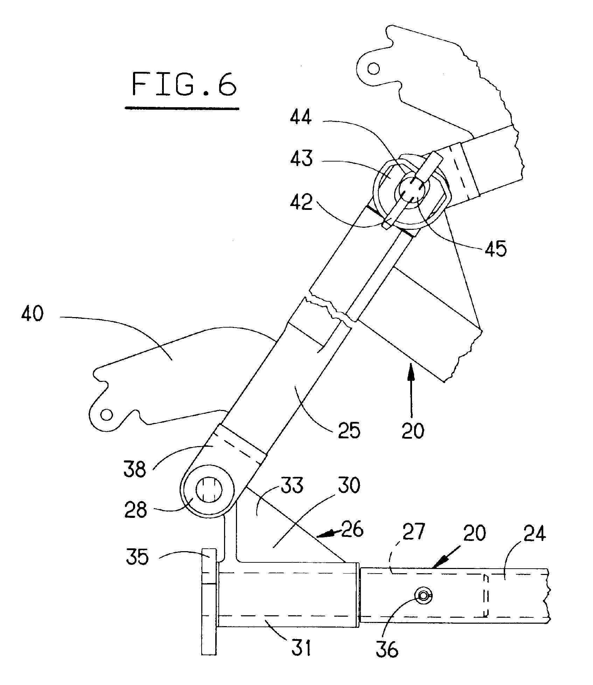

Pour le transport, l'oreille (41) de la partie extérieure (25) de chaque bras (20) est débloquée par l'opérateur. Chaque partie extérieure (25) est alors déplacée autour de son second pivot (28), en direction du boîtier central (13), jusqu'a ce que sa patte de fixation (43) puisse être fixée sur le téton (45) du second pivot (28) du bras (20) précédent (figures 5 et 6). Elle peut alors être immobilisée au moyen de la goupille (42) qui peut être engagée dans un trou prévu dans ledit téton. Dans cette position, ces parties extérieures (25) ne sont plus commandées par la came (14). Il ressort notamment de la figure 5 que toutes ces parties extérieures (25) se situent pratiquement sur un cercle fictif (C) passant au niveau des extrémités (34) des parties intérieures (24) des bras (20). Les dimensions du rotor (5) sont ainsi considérablement réduites sur tous les côtés, de sorte que la machine puisse aisément être transportée. Dans cette position, elle occupera également moins de place lors du rangement pendant la période de non-utilisation.

Dans la variante de réalisation selon les figures 7 à 9 la partie extérieure (25) de chaque bras porte-outils (20) est maintenue en position de travail et en position de transport par le ressort de traction (56). Pour le travail, ladite partie extérieure (25) s'étend sensiblement dans la même direction que la partie intérieure (24) correspondante. Sa patte de blocage (53) se situe sur l'extrémité du premier pivot (27). L'entraineur (55) est alors logé dans l'entaille (49) et assure ainsi une liaison positive entre les deux parties (24 et 25). Le pivotement de la partie intérieure (24), qui résulte du déplacement de son galet (23) dans la came de commande (14) est alors transmis à la partie extérieure (25) de sorte que ses outils (21) andainent les végétaux couchés sur le sol. Dans cette position la pression des végétaux sur lesdits outils (21) s'additionne à l'action du ressort (56) et contribue à maintenir la partie extérieure (25) de chaque bras (20) dans la position de travail.

Pour le transport la partie extérieure (25) de chaque bras (20) est déplacée autour du second pivot (28) dans le sens de rotation (F), vers le boîtier central (13). Dans un premier temps, le ressort (56) est étiré. Ensuite, dès qu'il est passé au-dessus du second pivot (28) correspondant, il se contracte et tire la partie extérieure (25) en direction du boîtier central (13) du rotor. Le crochet (61) est alors placé entre deux nervures de la pièce de jonction (30) de l'articulation (26) du bras porte-outils (20) précédent. Les parties extérieures (25) de tous les bras (20) sont alors repliées sur le cercle fictif (C) représenté sur la figure 5. Les éventuels pivotements des parties intérieures (24) ne sont plus transmis aux parties extérieures (25) et le diamètre du rotor est considérablement réduit.

Inversement, pour revenir dans la position de travail il suffit de décrocher la partie extérieure (25) de chaque bras porte-outils (20) et de la pivoter dans le sens opposé au sens de rotation (F) pour ramener l'entraineur (55) dans l'entaille (49) du premier pivot (27) correspondant.

Les transpositions d'une position dans l'autre sont extrèmement simples et rapides.

Il est bien évident que l'invention n'est pas limitée aux modes de réalisation tels que décrits ci-dessus et représentés sur les dessins annexés. Des modifications restent possibles, notamment en ce qui concerne la constitution des divers éléments ou par substitution d'équivalents techniques, sans pour autant sortir du domaine de protection défini dans les revendications.

## Revendications

1. Machine agricole pour l'andainage de produits, présentant notamment un châssis qui peut être relié à un tracteur et qui comporte au moins un rotor tournant autour d'un axe sensiblement vertical, lequel rotor possède un boîtier central portant des bras porte-outils et dans lequel est située une came qui commande lesdits bras porte-outils, de telle sorte que durant chaque révolution, ils pivotent autour de leurs axes géométriques afin que leurs outils ramassent puis déposent les produits sous la forme d'un andain, lesdits bras porte-outils étant réalisés en au moins une partie intérieure qui se situe près du boîtier central et une partie extérieure qui porte les outils de travail et qui est reliée à la partie intérieure au moyen d'une articulation autour de laquelle elle peut être déplacée pour le transport, caractérisée par le fait que ladite articulation (26) présente deux pivots (27 et 28) dont le premier (27) est sensiblement dirigé dans la même direction que la partie intérieure (24) du bras (20) correspondant et dont le second (28) est dirigé de telle sorte qu'il forme un angle (α) par rapport au premier pivot (27) et qu'elle comporte des moyens de blocage (29) de la partie extérieure (25) de chaque bras (20) par rapport à sa partie intérieure (24) dans la position de travail.

2. Machine selon la revendication 1, caractérisée par le fait que la partie intérieure (24) de chaque bras porte-outils (20) est sensiblement droite et que le premier pivot (27) s'étend dans le prolongement de ladite partie intérieure.

3. Machine selon la revendication 1 ou 2, caractérisée par le fait que les deux pivots (27 et 28) de chaque articulation (26) sont décalés l'un par rapport à l'autre.

4. Machine selon la revendication 3, caractérisée par le fait que par rapport au sens de rotation (F) du rotor (5) le second pivot (28) de chaque articulation (26) se situe devant le premier pivot (27).

5. Machine selon l'une quelconque des revendications 1 à 4, caractérisée par le fait que la valeur de l'angle (α) que forment les deux pivots (27 et 28) est sensiblement égale à 90°.

6. Machine selon la revendication 1, caractérisée par le fait que l'articulation (26) comporte une pièce de jonction (30) présentant deux paliers (31 et 32) dans lesquels sont logés les pivots (27 et 28).

7. Machine selon l'une quelconque des revendications précédentes, caractérisée par le fait que dans chaque articulation (26), le premier pivot (27) est relié à la partie intérieure (24) du bras porte-outils (20) et le second pivot (28) est relié à la partie extérieure (25).

8. Machine selon la revendication 7, caractérisée par le fait que le premier pivot (27) comporte une extrémité solidaire de la partie intérieure (24) du bras (20) et une deuxième extrémité située au-delà du palier (31) de la pièce de jonction (30), laquelle deuxième extrémité possède une bague d'arrêt (35).

9. Machine selon l'une quelconque des revendications précédentes, caractérisée par le fait que la partie extérieure (25) de chaque bras (20) comporte à son extrémité une chape (38) articulée sur le second pivot (28).

10. Machine selon l'une quelconque des revendications précédentes, caractérisée par le fait que le second pivot (28) est arrêté axialement au moyen d'un épaulement (37) et d'un circlips (39).

11. Machine selon l'une quelconque des revendications précédentes, caractérisée par le fait qu'au niveau de chaque articulation (26) elle comporte des moyens de blocage (29) pour solidariser la partie extérieure (25) de chaque bras (20) avec la partie intérieure (24) dans la position de travail.

12. Machine selon la revendication 11, caractérisée par le fait que la partie extérieure (25) de chaque bras (20) comporte une patte de blocage (40) pouvant être liée à la bague d'arrêt (35) du premier pivot (27) de l'articulation (26) correspondante.

13. Machine selon la revendication 11, caractérisée par le fait que la partie extérieure (25) de chaque bras (20) comporte une patte de blocage (53) munie d'un entraineur (55), que chaque premier pivot (27) comporte une entaille (49) dans laquelle peut se loger ledit entraineur et qu'un ressort de traction (56) relie la partie extérieure (25) de chaque bras (20) à la pièce de jonction (30).

14. Machine selon la revendication 13, caractérisée par le fait que le ressort (56) est accroché à la partie extérieure (25) en un point (58) qui est situé sensiblement à égales distances des deux extrémités de ladite partie extérieure.

15. Machine selon la revendication 13, caractérisée par le fait que le ressort (56) est accroché à la pièce de jonction (30) en un point (60) qui se situe plus près du boîtier central (13) du rotor que le second pivot (28) correspondant et, vu dans le sens de rotation (F) du rotor, plus en arrière que ledit second pivot (28).

16. Machine selon la revendication 13, caractérisée par le fait que le ressort de traction (56) se situe au-dessus du plan dans lequel pivote la partie extérieure (25) de chaque bras porte-outils (20), autour du second pivot (28).

17. Machine selon l'une quelconque des revendications 1 à 8 et 10 à 16, caractérisée par le fait que chaque pièce de jonction (30) comporte un palier (32) en forme de chape et que chaque partie extérieure (25) des bras porte-outils (20) comporte un embout (50) qui est articulé dans ledit palier à l'aide du second pivot (28) correspondant.

18. Machine selon la revendication 13, caractérisée par le fait que la patte de blocage (53) comporte un alésage (54) dans lequel peut se loger l'extrémité libre du premier pivot (27) et que l'entraineur (55) traverse ledit alésage.

19. Machine selon l'une quelconque des revendications précédentes, caractérisée par le fait que la partie extérieure (25) de chaque bras (20) comporte une patte de fixation (43).

20. Machine selon l'une quelconque des revendications précédentes, caractérisée par le fait que chaque second pivot (28) comporte à son extrémité un téton (45).

21. Machine selon l'une quelconque des revendications 13 à 18, caractérisée par le fait que la partie extérieure (25) de chaque bras (20) comporte un crochet de fixation (61).

## Patentansprüche

1. Landmaschine zum Schwaden von Produkten, die insbesonders einen Rahmen aufweist, der an einen Schlepper angehängt werden kann und der zumindest einen um eine im wesentlichen aufrechtstehende Achse rotierenden Rotor umfaßt, welcher Rotor ein zentrales Gehäuse besitzt, das Werkzeugträgerarme trägt und in welchem sich eine Steuerkurve befindet, die die Werkzeugträgerarme derart steuert, daß sie während jeder Umdrehung um ihre geometrischen Achsen schwenken, damit ihre Werkzeuge die Produkte aufnehmen und dann in Form einer Schwade ablegen, welche Werkzeugträgerarme als zumindest ein Innenteil, der sich nahe dem zentralen Gehäuse befindet, und ein Außenteil, der die Arbeitswerkzeuge trägt und der mit dem Innenteil mittels eines Gelenks verbunden ist, um das er für den Transport bewegt werden kann, ausgeführt sind, dadurch gekennzeichnet, daß das Gelenk (26) zwei Gelenkzapfen (27 und 28) aufweist, von denen der erste (27) im wesentlichen in derselben Richtung wie der Innenteil (24) des entsprechenden Armes (20) ausgerichtet ist und der zweite (28) derart ausgerichtet ist, daß er einen Winkel (α) in bezug auf den ersten Gelenkzapfen (27) bildet, und daß es Mittel (29) zum Feststellen des Außenteils (25) jedes Armes (20) in bezug auf seinen Innenteil (24) in der Arbeitsstellung umfaßt.

2. Maschine nach Anspruch 1, dadurch gekennzeichnet, daß der Innenteil (24) jedes Werkzeugträgerarms (20) im wesentlichen gerade ist und daß sich der erste Gelenkzapfen (27) in der Verlängerung des Innenteils erstreckt.

3. Maschine nach Anspruch 1 oder 2, dadurch gekennzeichnet, daß die beiden Gelenkzapfen (27 und 28) jedes Gelenks (26) zueinander versetzt sind.

4. Maschine nach Anspruch 3, dadurch gekennzeichnet, daß sich, bezogen auf die Drehrichtung (F) des Rotors (5), der zweite Gelenkzapfen (28) jedes Gelenks (26) vor dem ersten Gelenkzapfen (27) befindet.

5. Maschine nach irgendeinem der Ansprüche 1 bis 4, dadurch gekennzeichnet, daß der Wert des Winkels (α), den die beiden Gelenkzapfen (27 und 28) bilden, im wesentlichen gleich 90° ist.

6. Maschine nach Anspruch 1, dadurch gekennzeichnet, daß das Gelenk (26) ein Verbindungsstück (30) umfaßt, das zwei Lager (31 und 32) aufweist, in welchen die Gelenkzapfen (27 und 28) angeordnet sind.

7. Maschine nach irgendeinem der vorhergehenden Ansprüche, dadurch gekennzeichnet, daß der erste Gelenkzapfen (27) in jedem Gelenk (26) mit dem Innenteil (24) des Werkzeugträgerarms (20) verbunden ist und der zweite Gelenkzapfen (28) mit dem Außenteil (25) verbunden ist.

8. Maschine nach Anspruch 7, dadurch gekennzeichnet, daß der erste Gelenkzapfen (27) ein Ende, das mit dem Innenteil (24) des Armes (20) fest verbunden ist, und ein zweites Ende aufweist, das sich jenseits des Lagers (31) des Verbindungsstücks (30) befindet, welches zweite Ende einen Stellring (35) besitzt.

9. Maschine nach irgendeinem der vorhergehenden Ansprüche, dadurch gekennzeichnet, daß der Außenteil (25) jedes Arms (20) an seinem Ende eine Gabel (38) aufweist, die an dem zweiten Gelenkzapfen (28) angelenkt ist.

10. Maschine nach irgendeinem der vorhergehenden Ansprüche, dadurch gekennzeichnet, daß der zweite Gelenkzapfen (28) axial mittels einer Schulter (37) und eines Sicherungsrings (29) fixiert ist.

11. Maschine nach irgendeinem der vorhergehenden Ansprüche, dadurch gekennzeichnet, daß sie im Bereich jedes Gelenks (26) Feststellmittel (29) umfaßt, um den Außenteil (25) jedes Armes (20) mit dem Innenteil (24) in der Arbeitsstellung starr zu verbinden.

12. Maschine nach Anspruch 11, dadurch gekennzeichnet, daß der Außenteil (25) jedes Armes (20) einen Befestigungslappen (40) aufweist, der mit dem Stellring (35) des ersten Gelenkzapfens (27) des entsprechenden Gelenks (26) verbunden werden kann.

13. Maschine nach Anspruch 11, dadurch gekennzeichnet, daß der Außenteil (25) jedes Armes (20) einen mit einem Mitnehmer (55) versehenen Befestigungslappen (53) aufweist, daß jeder erste Gelenkzapfen (27) eine Vertiefung (49) aufweist, in welche der Mitnehmer (55) eingreifen kann und daß eine Zugfeder (56) den Außenteil (25) jedes Armes (20) mit dem Verbindungsstück (30) verbindet.

14. Maschine nach Anspruch 13, dadurch gekennzeichnet, daß die Zugfeder (56) an dem Außenteil (25) an einer Stelle (58) eingehängt ist, die sich im wesentlichen in gleichen Abständen von den beiden Enden des Außenteils befindet.

15. Maschine nach Anspruch 13, dadurch gekennzeichnet, daß die Feder (56) am Verbindungsstück (30) an einer Stelle (60) eingehängt ist, die sich näher dem zentralen Gehäuse (13) des Rotors als der entsprechende zweite Gelenkzapfen (28) und, in Drehrichtung (F) des Rotors gesehen, weiter hinten als der zweite Gelenkzapfen (28) befindet.

16. Maschine nach Anspruch 13, dadurch gekennzeichnet, daß sich die Zugfeder (56) oberhalb der Ebene befindet, in welcher der Außenteil (25) jedes Werkzeugträgerarms (20) um den zweiten Gelenkzapfen (28) schwenkt.

17. Maschine nach irgendeinem der Ansprüche 1 bis 8 und 10 bis 16, dadurch gekennzeichnet, daß jedes Verbindungsstück (30) ein gabelförmiges Lager (32) umfaßt und daß jeder Außenteil (25) der Werkzeugträgerarme (20) ein Ansatzstück (50) aufweist, das im Lager mittels des entsprechenden zweiten Gelenkzapfens (28) angelenkt ist.

18. Maschine nach Anspruch 13, dadurch gekennzeichnet, daß der Befestigungslappen (53) eine Bohrung (54) enthält, in welche das freie Ende des ersten Gelenkzapfens (27) eingreifen kann, und daß der Mitnehmer (55) diese Bohrung durchsetzt.

19. Maschine nach irgendeinem der vorhergehenden Ansprüche, dadurch gekennzeichnet, daß der Außenteil (25) jedes Armes (20) eine Befestigungslasche (43) aufweist.

20. Maschine nach irgendeinem der vorhergehenden Ansprüche, dadurch gekennzeichnet, daß jeder zweite Gelenkzapfen (28) an seinem Ende einen Ansatz (45) aufweist.

21. Maschine nach irgendeinem der Ansprüche 13 bis 18, dadurch gekennzeichnet, daß der Außenteil (25) jedes Armes (20) einen Befestigungshaken (61) aufweist.

## Claims

1. Agricultural machine for windrowing products, with particularly a frame connectable to a tractor and comprising at least one rotor turning around an approximately vertical axis, said rotor being equipped with a central housing carrying toolholder arms and in which is located a cam which controls said toolholder arms, so that dig each rotation they pivot around their geometrical axes in order that their tools gather and then lay the product down in a swath, said toolholder arms being achieved in at least an inside part located close to the central housing and an outside part carrying the work tools and which is connected to the inside part by means of an articulation around which it can be displaced for transport, characterized in that said articulation (26) is provided with two pivots (27 and 28), the first (27) of which is approximately directed in the same direction as the inside part (24) of the corresponding arm (20) and the second (28) is directed in order to form an angle (α) relative to the first pivot (27) and that it comprises means (29) to lock the outside part (25) of each arm (20) with regard to its inside part (24) in the work position.

2. Machine according to claim 1, characterized in that the inside part (24) of each toolholder arm (20) is approximately straight and that the first pivot (27) extends in the prolongation of the said inside part.

3. Machine according to claim 1 or 2, characterized in that the two pivots (27 and 28) of each articulation (26) are offset to one another.

4. Machine according to claim 3, characterized in that the second pivot (28) of each articulation (26) is located in front of the first pivot (27) with regard to the direction of rotation (F) of the rotor (5).

5. Machine according to anyone of claims 1 to 4, characterized in that the value of the angle (α) formed by the two pivots (27 and 28) is approximately equal to 90°.

6. Machine according to claim 1, characterized in that the articulation (26) comprises a junction part (30) with two bearings (31 and 32) in which are housed the pivots (27 and 28).

7. Machine according to anyone of the preceding claims, characterized in that in each articulation (26) the first pivot (27) is connected to the inside part (24) of the toolholder arm (20) and the second pivot (28) is connected to the outside part (25).

8. Machine according to claim 7, characterized in that the first pivot (27) comprises an end integral with the inside part (24) of the arm (20) and a second end located beyond the bearing (31) of the junction part (30), said second end having a retainer ring (35).

9. Machine according to anyone of the preceding claims, characterized in that the outside part (25) of each arm (20) comprises at its end a joint yoke (38) which is articulated on the second pivot (28).

10. Machine according to anyone of the preceding claims, characterized in that the second pivot (28) is axially blocked by means of a shoulder (37) and a circlip (39).

11. Machine according to anyone of the preceding claims, characterized in that at the level of each articulation (26) it comprises locking means (29) to attach the outside part (25) of each arm (20) to the inside part (24) in the work position.

12. Machine according to claim 11, characterized in that the outside part (25) of each arm (20) comprises a locking lug (40) connectable to the retainer ring (35) of the first pivot (27) of the corresponding articulation (26).

13. Machine according to claim 11, characterized in that the outside part (25) of each arm (20) comprises a locking lug (53) provided with a driver (55), that each first pivot (27) comprises a notch (49) in which said driver can be housed and that a draw spring (56) connects the outside part (25) of each arm (20) to the junction part (30).

14. Machine according to claim 13, characterized in that the spring (56) is hooked to the outside part (25) at a point (58) located approximately at equal distance from the two ends of said outside part.

15. Machine according to claim 13, characterized in that the spring (56) is hooked to the junction part (30) at a point (60) located closer to the central housing (13) of the rotor than the corresponding second pivot (28) and that, seen in the direction of rotation (F) of the rotor, backwards to said second pivot (28).

16. Machine according to claim 13, characterized in that the draw spring (56) is located above the plane in which the outside part (25) of each toolholder arm (20) pivots around the second pivot (28).

17. Machine according to anyone of claims 1 to 8 and 10 to 16, characterized in that each junction part (30) comprises a being (32) forming a yoke and that each outside part (25) of the toolholder arms (20) comprises an end piece (50) which is articulated in said bearing with the corresponding second pivot (28).

18. Machine according to claim 13, characterized in that the locking lug (53) comprises a bore (54) in which the free end of the first pivot (27) can be housed and that the driver (55) passes through said bore.

19. Machine according to anyone of the preceding claims, characterized in that the outside part (25) of each arm (20) comprises an attachment lug (43).

20. Machine according to anyone of the preceding claims, characterized in that each second pivot (28) comprises a stud (45) at its end.

21. Machine according to anyone of the claims 13 to 18, characterized in that the outside part (25) of each arm (20) comprises a hook (61).
